# FASCICULE DE BREVET EUROPEEN

(11) **EP 4 091 447 B1**
(45) Date de publication et mention de la délivrance du brevet: **30.04.2025**
(21) Numéro de dépôt: 22173187.0
(22) Date de dépôt: 13.05.2022
(51) Int. Cl.: A01N 37/14, A01P 13/00, A01N 25/04

(54) **GEL UTILISÉE COMME RÉGULATEUR DE CROISSANCE VÉGÉTALE ET/OU HERBICIDE**
GEL, DAS ALS PFLANZENWACHSTUMSREGULATOR UND/ODER HERBIZID EINGESETZT WIRD
GEL USED AS A PLANT GROWTH REGULATOR AND/OR HERBICIDE

(30) Priorité: 19.05.2021 FR 2105211
(43) Date de publication de la demande: 23.11.2022
(73) Titulaire: FILAB, 21000 Dijon (FR); APRR, 21850 Saint-Apollinaire (FR)
(72) Inventeur: GOUX, Jérôme, 21121 Fontaine Lès Dijon (FR)
(74) Mandataire: Oudin, Stéphane

(56) Documents cités:
- EP-A1- 0 774 896
- EP-A1- 3 704 942
- WO-A1-2015/034488

## Description

### Domaine technique de l'invention

La présente invention concerne un régulateur de croissance végétale et un herbicide. Plus particulièrement, la présente invention concerne l'utilisation d'un gel comprenant de l'anhydride nonanoïque, un polymère et de l'eau comme régulateur de croissance végétale et/ou herbicide. La présente invention concerne également des compositions et des procédés régulant la croissance végétale et/ou herbicides.

### État de la technique antérieure

L'utilisation du glyphosate comme herbicide est de plus en plus contestée par les autorités réglementaires et par le grand public.

Les solutions alternatives au glyphosate disponibles pour les agriculteurs sont manuelles ou mécaniques. Plusieurs sont déjà utilisées par les collectivités locales françaises, qui ne peuvent plus utiliser le glyphosate dans les espaces ouverts au public depuis janvier 2017.

Il existe notamment des méthodes préventives, comme la rotation des cultures (qui permet de rompre régulièrement le développement des mauvaises herbes, qui sont différentes selon les plantes cultivées), le faux semis (la préparation des champs plusieurs semaines avant le semis pour permettre aux mauvaises herbes de germer, et les éliminer mécaniquement avant d'ensemencer réellement), ou encore le paillage (qui consiste à recouvrir les sols de matériaux d'origine végétale et minérale, ou bien de certains matériaux synthétiques, pour stopper la croissance des adventices).

Des moyens mécaniques permettent également d'endiguer la pousse des mauvaises herbes en arrachant ou en détruisant les racines des plantes non désirées. Il existe différents types de machines en fonction des cultures et de leurs spécificités, certaines coupant les racines à plusieurs centimètres de profondeurs, d'autres utilisant des herses, qui agissent sur le sol en surface. Les exploitants peuvent aussi pratiquer le désherbage thermique, en passant des flammes, de l'eau chaude ou de la vapeur d'eau sur les plantes adventices pour les faire mourir.

Ces méthodes présentent toutefois des inconvénients. Elles affectent notamment la structure des sols et peuvent accroître leur érosion. Elles nécessitent également des dépenses d'énergie conséquentes, et ne sont pas toutes adaptées aux grandes exploitations.

Pour l'heure, il n'existe pas de produit biologique qui ait une efficacité équivalente au glyphosate.

De ce fait, trouver une solution alternative à l'utilisation du glyphosate représente un enjeu stratégique majeur.

Pour être acceptée, cette alternative devra présenter une efficacité équivalente voire supérieure au glyphosate et ne pas être nocive pour l'environnement ou pour la santé humaine. Idéalement, en plus d'une action désherbante le produit devra avoir une action de régulateur de croissance pour limiter le nombre d'application saisonnière et les étapes de débroussaillage et de tonte mécanique.

L'action de l'acide nonanoïque (aussi appelé acide pelargonique) est connue comme régulateur de croissance et/ou herbicide.

Les demandeurs ont déjà proposé l'utilisation de l'anhydride nonanoïque comme régulateur de croissance et/ ou herbicide (EP3704942). Bien que cette utilisation présente de nombreux avantages, la formulation de ces compositions reste encore à affiner afin d'augmenter leur efficacité.

### Présentation de l'invention

La présente invention se propose de résoudre les problèmes décrits précédemment.

Ainsi la présente invention concerne l'utilisation d'un gel comprenant de l'anhydride nonanoïque, un polymère et de l'eau comme régulateur de croissance végétale et/ou herbicide.

La déposante a pu mettre en évidence qu'un gel selon l'invention ne se comportait pas comme une solution d'acide nonanoïque ni comme de l'anhydride nonanoïque seul. Cette formulation présente une efficacité, en intensité et en durée, plus importante que celle de l'acide nonanoïque.

La présence du polymère et de l'eau dans le gel selon l'invention agit comme un réservoir d'acide nonanoïque qui va pouvoir agir plus longtemps que si il avait été épandu seul. La présente invention concerne également un gel comprenant de l'anhydride nonanoïque, un polymère et de l'eau.

Selon un mode de réalisation préféré de l'invention ledit herbicide est un herbicide foliaire.

Selon un mode de réalisation préféré de l'invention ledit herbicide est un herbicide racinaire.

Selon un mode de réalisation préféré de l'invention ledit anhydride nonanoïque est à une concentration supérieure à 30% en masse.

Selon un mode de réalisation préféré de l'invention la solution aqueuse selon l'invention comprend ledit anhydride nonanoïque est à une concentration comprise entre 30% et 85% en masse.

Selon un mode de réalisation préféré de l'invention ladite solution aqueuse comprend de l'eau à une concentration inférieure à 70% en masse.

Selon un mode de réalisation préféré de l'invention ladite solution aqueuse comprend de l'eau à une concentration comprise entre 15% et 70% en masse.

Dans le cadre de la présente invention, le terme « polymère » fait plus particulièrement référence à un polymère soluble dans l'eau

Selon un mode réalisation préféré, ledit polymère est choisi dans le groupe constitué de Poly(oxyde de phénylène) (PPO), Polypropylène glycol (PPG), Polycaprolactone (PCL), Acide polylactique (PLA), Acide polyglycolique (PGA), polyester, polyamide, polyacrylate, polyurethane et leurs mélanges.

Selon un mode de réalisation préféré de l'invention ledit polymère est du Polyéthylène Glycol.

Selon un mode de réalisation préféré de l'invention ledit Polyéthylène Glycol est à une concentration supérieure à 5% en masse.

Selon un mode de réalisation préféré de l'invention ledit Polyéthylène Glycol est à une concentration comprise entre 20% et 30% en masse.

Selon un mode de réalisation préféré de l'invention ledit Polyéthylène Glycol a une masse molaire supérieure à 3000 g.mol⁻¹, préférentiellement comprise entre 3000 et 10000 g.mol⁻¹, encore plus préférentiellement entre 5000 et 7000 g.mol⁻¹ et tout à fait préférentiellement égale à 6000 g.mol⁻¹.

La présente invention concerne également un procédé pour la régulation de la croissance de plantes ou la lutte contre des plantes nuisibles, caractérisé en ce qu'on applique sur les plantes, parties de plantes, semences de plantes ou sur une aire une quantité efficace une solution selon l'invention.

Dans le cadre de la présente invention, le terme « régulateur de croissance » fait référence à un produit et/ou un procédé engendrant une croissance plus faible de tout ou partie d'un végétal par rapport au même type de végétal cultivé dans les mêmes conditions en l'absence dudit produit et/ou procédé.

Selon un mode de réalisation préféré de l'invention, ledit herbicide est un herbicide foliaire.

Dans le cadre de la présente invention, le terme « herbicide foliaire » fait référence au fait que l'effet herbicide est notamment obtenu après contact entre l'anhydride nonanoïque et les feuilles du végétal à traiter.

Selon un mode de réalisation alternatif ou complémentaire préféré de l'invention, ledit herbicide est un herbicide racinaire.

Dans le cadre de la présente invention, le terme « herbicide racinaire » fait référence au fait que l'effet herbicide est notamment obtenu après contact entre l'anhydride nonanoïque et les racines du végétal à traiter.

La présente invention concerne également un procédé pour la régulation de la croissance de plantes ou un procédé pour la lutte contre des plantes nuisibles, remarquable en ce qu'on applique sur les plantes, parties de plantes, semences de plantes ou sur une aire une quantité efficace d'une solution selon l'invention.

Dans le cadre de la présente invention, le terme « quantité efficace » fait référence à une quantité de produit permettant d'obtenir l'effet herbicide et/ou régulateur de croissance souhaité.

Préférentiellement, ladite quantité efficace est supérieure à 5g, préférentiellement 10g et encore plus préférentiellement 15g d'anhydride nonanoïque par m² de surface à traiter.

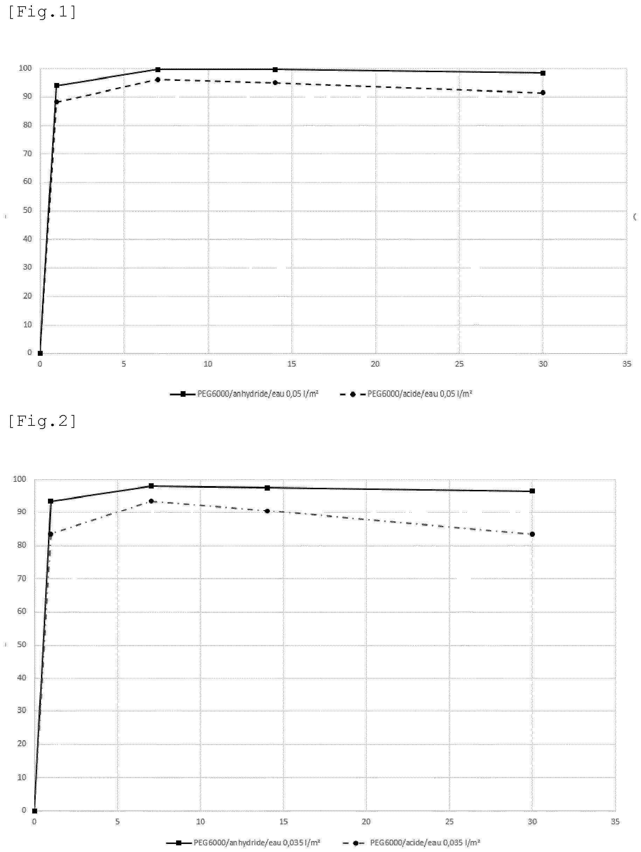

[Fig. 1] montre l'action d'une composition comprenant de l'anhydride nonanoïque, du PEG6000 et de l'eau, comparée à celle d'une composition comprenant de l'acide pelargonique, du PEG6000 et de l'eau pulvérisée par spray à une dose de 0.05 l/m² sur les feuilles d'adventices de différents types d'adventices herbacés.

[Fig. 2] montre l'action d'une composition comprenant de l'anhydride nonanoïque, du PEG6000 et de l'eau, comparée à celle d'une composition comprenant de l'acide pelargonique, du PEG6000 et de l'eau pulvérisée par spray à une dose de 0.035 l/m² sur les feuilles d'adventices de différents types d'adventices herbacés.

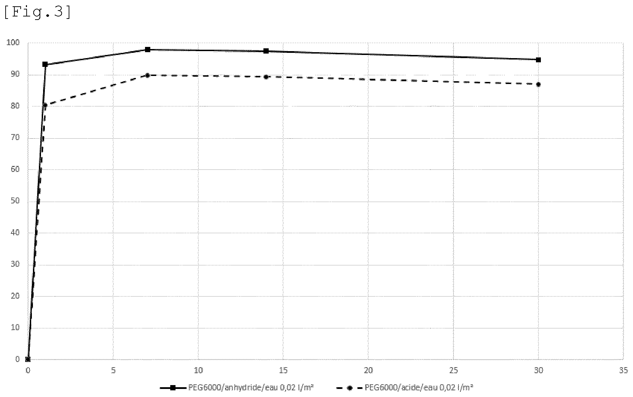

[Fig. 3] montre l'action d'une composition comprenant de l'anhydride nonanoïque, du PEG6000 et de l'eau, comparée à celle d'une composition comprenant de l'acide pelargonique, du PEG6000 et de l'eau pulvérisée par spray à une dose de 0.02 l/m² sur les feuilles d'adventices de différents types d'adventices herbacés.

### Description détaillée de l'invention

L'utilisation selon l'invention peut être mise en œuvre sur tout type de surface (naturelle ou artificielle) et plus particulièrement sur les routes, bas-côtés, voies d'accès, parking, les voies ferrés, les espaces verts et terrasses. La solution, pour utilisation selon l'invention, peut comprendre en outre des agents supplémentaires tels que des agents facilitant la pénétration, des colorants, des émulsifiants, des dispersants, des agents mouillants, des liants, des épaississants et/ou des conservateurs.

La concentration d'anhydride nonanoïque dans les formulations utilisables dans le cadre de la présente invention peut être facilement estimée par l'homme du métier. Toutefois, il a été montré que des concentrations supérieures à 10%, préférentiellement supérieures à 20% et encore plus préférentiellement comprises entre 30 et 50% en masse permettraient d'obtenir une efficacité suffisante.

Dans le cadre de la présente invention un pourcentage en masse fait référence à une quantité en gramme d'anhydride nonanoïque pur pour 100g de masse totale de ladite solution.

Les formulations liquides, utilisables dans le cadre de la présente invention peut comprendre un ou plusieurs solvants. Des tensioactifs peuvent être utilisés en tant qu'agents facilitant la pénétration, émulsifiants, dispersants, agents mouillants ou autres utilisés dans la formulation.

La quantité de tensioactif utilisée est généralement de 0,1 à 50% en masse, de préférence d'environ 0,1 à 25% en masse, par rapport à une quantité totale de la solution.

Selon un mode de réalisation préféré, la solution selon l'invention comprend en outre un colorant, de préférence un colorant d'origine naturelle. Selon un mode de réalisation tout à fait préféré, ledit colorant est la chlorophylle.

Ce dernier mode de réalisation la présence d'un colorant permet de compenser la perte de coloration, de la surface traitée, liée à la disparition des végétaux. La présence dudit colorant permet également de masquer la présence des végétaux traités en utilisant un colorant de couleur similaire à celle de la surface traitée.

L'homme du métier est apte à sélectionner le colorant adéquat et sa concentration en fonction des caractéristiques de la surface traitée.

Les liants et les épaississants sont bien connus de l'homme du métier. Il s'agit, par exemple, de la dextrine, des sels de carboxyméthylcellulose, de la polyvinylpyrrolidone, le polyvinylalcool, le mannitol de sodium et du sorbitol.

Le procédé selon l'invention est similaire à un procédé d'application conventionnel pour des produits chimiques agricoles connus et comprend, par exemple, une pulvérisation aérienne, un épandage de terre ou une application sur le feuillage.

L'utilisation selon l'invention peut être mise en œuvre seul ou avec au moins un autre herbicide, régulateur de croissance des végétaux, fongicide, insecticide, acaricide, nématocide ou mélange de ceux-ci.

### Exemples

### /Utilisation foliaire.

Différentes variétés de plantes ont été cultivées dans des conditions de lumière, de température et d'hygrométrie contrôlées. Plus particulièrement, lesdites plantes ont été soumises à des cycles de 8 heures de nuits (à 18°C) et 16 heures de jours (à 23°C) à une humidité constante de 70%(+/- 20).

Ces variétés ont été traitées par des solutions comprenant :
- de l'anhydride nonanoïque (38%), du PEG 6000 (24.8%), et de l'eau (37.2%), ou
- de l'anhydride nonanoïque et du PEG 6000, ou,
- de l'acide nonanoïque, du PEG 6000, et de l'eau, ou
- et un herbicide de l'art antérieur (Herbistop super^{®}) comme témoin positif.

Des plantes témoins non traités ont été utilisées comme témoin négatif.

Les solutions comprenant de l'anhydride nonanoïque ou de l'acide nonanoïque ont été épandues avec des densités variables (0.05 l/m², 0.035l/m² et 0.02 l/m²).

L'action de ses différentes compositions a été suivie pendant 14 jours avec des prises de mesures à 24h, 7 jours, 14 jours et 30 jours. Les résultats obtenus sont représentés aux [Fig. 1], [Fig. 2] et [Fig 3]. La cotation de l'efficacité du traitement est établie par comparaison entre le traitement évalué et le témoin non traité. Le pourcentage de destruction est estimé par le rapport de la biomasse détruite/biomasse encore verte et le nombre de plantes encore vivantes du traité versus le témoin.

Une dégradation de l'adventice est constatée après 1 jour quel que soit le produit utilisé. Les effets de l'assèchement sont visibles quelques heures après pulvérisation. Pour toutes les densités d'épandage, on observe une efficacité supérieure des solutions aqueuses d'anhydride nonanoïque par rapport à celle comprenant de l'acide nonanoïque. Par ailleurs, on observe une efficacité constante à 14 jours des solutions aqueuses d'anhydride nonanoïque, alors que l'efficacité des solutions comprenant de l'acide nonanoïque décroit à 14jours.

## Revendications

1. Utilisation d'un gel comprenant de l'anhydride nonanoïque, un polymère et de l'eau comme régulateur de croissance végétale et/ou herbicide.

2. Utilisation selon l'une des revendications précédentes **caractérisée en ce que** ledit herbicide est un herbicide foliaire.

3. Utilisation selon l'une des revendications précédentes **caractérisée en ce que** ledit herbicide est un herbicide racinaire.

4. Utilisation selon l'une des revendications précédentes **caractérisée en ce que** ledit anhydride nonanoïque est à une concentration supérieure à 30% en masse.

5. Utilisation selon l'une des revendications précédentes **caractérisée en ce que** ledit anhydride nonanoïque est à une concentration comprise entre 30% et 85% en masse.

6. Utilisation selon l'une des revendications précédentes **caractérisée en ce que** ledit polymère est du Polyéthylène Glycol.

7. Utilisation selon l'une des revendications précédentes **caractérisée en ce que** ledit Polyéthylène Glycol est à une concentration supérieure à 5% en masse.

8. Utilisation selon l'une des revendications précédentes **caractérisée en ce que** ledit Polyéthylène Glycol est à une concentration comprise entre 5% et 30% en masse.

9. Utilisation selon l'une des revendications précédentes **caractérisée en ce que** ledit Polyéthylène Glycol a une masse molaire supérieure à 3000 g.mol⁻¹, préférentiellement comprise entre 3000 et 10000 g.mol⁻¹, encore plus préférentiellement entre 5000 et 7000 g.mol⁻¹ et tout à fait préférentiellement égale à 6000 g.mol⁻¹.

10. Procédé pour la régulation de la croissance de plantes ou la lutte contre des plantes nuisibles, **caractérisé en ce qu'**on applique sur les plantes, parties de plantes, semences de plantes ou sur une aire une quantité efficace d'un gel comprenant de l'anhydride nonanoïque, un polymère et de l'eau.

## Patentansprüche

1. Verwendung eines Gels, das Nichtanonanhydrid, ein Polymer und Wasser als Pflanzenwachstumsregulator und/oder Herbizid enthält.

2. Verwendung nach einem der vorhergehenden Ansprüche, **dadurch gekennzeichnet, dass** das Herbizid ein Blattherbizid ist.

3. Verwendung nach einem der vorhergehenden Ansprüche, **dadurch gekennzeichnet, dass** das Herbizid ein Wurzelherbizid ist.

4. Verwendung nach einem der vorhergehenden Ansprüche, **dadurch gekennzeichnet, dass** das Nichtanonanhydrid eine Konzentration von mehr als 30 Massenprozent aufweist.

5. Verwendung nach einem der vorhergehenden Ansprüche, **dadurch gekennzeichnet, dass** das Nichtanonanhydrid in einer Konzentration zwischen 30 und 85 Massenprozent liegt.

6. Verwendung nach einem der vorhergehenden Ansprüche, **dadurch gekennzeichnet, dass** das Polymer Polyethylenglykol ist.

7. Verwendung nach einem der vorhergehenden Ansprüche, **dadurch gekennzeichnet, dass** das Polyethylenglykol eine Konzentration von mehr als 5 Massenprozent hat.

8. Verwendung nach einem der vorhergehenden Ansprüche, **dadurch gekennzeichnet, dass** das Polyethylenglykol in einer Konzentration zwischen 5 und 30 Massenprozent liegt.

9. Verwendung nach einem der vorhergehenden Ansprüche, **dadurch gekennzeichnet, dass** das Polyethylenglykol eine molare Masse von mehr als 3000 g.mol ⁻¹ aufweist, vorzugsweise zwischen 3000 und 10000 g.mol ⁻¹, noch vorzugsweise zwischen 5000 und 7000 g.mol ⁻¹ und besonders vorzugsweise gleich 6000 g.mol ⁻¹.

10. Verfahren zur Regulierung des Pflanzenwachstums oder zur Bekämpfung von Schädlingen, **dadurch gekennzeichnet, dass** auf Pflanzen, Pflanzenteile, Pflanzensamen oder auf eine Fläche eine wirksame Menge eines Gels bestehend aus Nichtanonanhydrid, einem Polymer und Wasser aufgetragen wird.

## Claims

1. Use of a gel comprising nonanoic anhydride, a polymer and water as a plant growth regulator and/or herbicide.

2. Use according to one of the preceding claims **characterised in that** said herbicide is a leaf herbicide.

3. Use according to one of the preceding claims, **characterised in that** said herbicide is a root herbicide.

4. Use according to one of the preceding claims **characterised in that** said nonanoic anhydride is at a concentration greater than 30% by mass.

5. Use according to one of the preceding claims **characterised in that** said nonanoic anhydride is at a concentration between 30% and 85% by mass.

6. Use according to one of the preceding claims, **characterised in that** said polymer is polyethylene glycol.

7. Use according to one of the preceding claims, **characterised in that** said polyethylene glycol is at a concentration greater than 5% by mass.

8. Use according to one of the preceding claims, **characterised in that** said polyethylene glycol is at a concentration between 5% and 30% by mass.

9. Use according to one of the preceding claims, **characterised in that** said polyethylene glycol has a molar mass greater than 3000 g.mol ⁻¹, preferentially between 3000 and 10000 g.mol ⁻¹, even more preferentially between 5000 and 7000 g.mol ⁻¹ and entirely preferentially equal to 6000 g.mol ⁻¹.

10. Method for regulating plant growth or combating harmful plants, **characterised in that** an effective amount of a gel comprising nonanoic anhydride, a polymer and water is applied to plants, parts of plants, plant seeds or an area.
